# EUROPÄISCHE PATENTSCHRIFT

(11) **EP 0 829 613 B1**
(45) Veröffentlichungstag und Bekanntmachung des Hinweises auf die Patenterteilung: **17.11.2004**
(21) Anmeldenummer: 97115136.0
(22) Anmeldetag: 02.09.1997
(51) Int. Cl.: E06B 9/84, H02P 3/16

(54) **Antriebsvorrichtung für einen Rauchschutzvorhang o. dgl.**
Driving device for a smoke curtain or similar
Dispositif d'entraînement pour rideau coupe-feu ou similaire

(30) Priorität: 12.09.1996 DE 19637039
(43) Veröffentlichungstag der Anmeldung: 18.03.1998
(73) Patentinhaber: Becker-Antriebe GmbH, 35764 Sinn (DE)
(72) Erfinder: Ciliox, Volker, 35713 Eschenburg-Simmersbach (DE)
(74) Vertreter: Müller, Eckhard, Dr.

(56) Entgegenhaltungen:
- CH-A- 685 221
- DE-A- 4 344 424
- US-A- 4 494 058

## Beschreibung

Die Erfindung betrifft eine Antriebsvorrichtung für einen Rauchschutzvorhang, Rolladen, Rolltor, Garagentor, Feuerschutzbehang, Raumteiler, Behang oder dgl., gemäß dem Oberbegriff des Anspruches 1.

Bei solchen Rauchschutz- oder Brandvorhängen bzw. Rolläden oder dgl. ist es erforderlich, daß im Gefahrenfalle der Behang auch ohne wirksamen elektromotorischen Antrieb selbsttätig in die Schließstellung überführt bzw. abgerollt wird. Der elektromotorische Antrieb besteht in der Regel aus einem Motor, insbesondere einem Rohrmotor, der mit einer elektromagnetischen Arbeitsstrombremse mechanisch gekoppelt ist. Sobald der Motor z.B. durch Rauchsensoren, Wärmesensoren oder dgl. betätigt wird, wird die elektromagnetische Arbeitsstrombremse deaktiviert, d.h. gelöst. Umgekehrt ist die Arbeitsstrombremse aktiviert und damit wirksam, solange der elektrische Motor nicht betätigt wird. In der oberen Endstellung des Vorhangs wird die Arbeitsstrombremse im Normalbetrieb mit 24 V beaufschlagt und hält damit den Vorhang in der gewünschten Endlage. Bei einem Stromausfall, also ohne Spannung, wirkt die Arbeitsstrombremse nicht mehr und der Vorhang fällt durch sein Eigengewicht nach unten. Wenn der Netzstrom ausgefallen ist, kann auch ein Akkumulator die Bremsspannung aufrecht halten, so daß nicht bei jedem Stromausfall der Vorhang abfällt. Im Katastrophenfall, falls also die komplette Stromversorgung abgetrennt ist und falls auch die Akkuversorgung nicht mehr gewährleistet ist und/oder die Längsverbindung zwischen Antrieb und Steuerung unterbrochen ist, würde der Vorhang schnell ablaufen, weil keine Steuerungsfunktion mehr vorhanden ist. Exakt für diesen Fall ist die Bremse gedacht, welche als Zusatzbremseinrichtung dient und im eigentlichen Sinn keine Haltefunktion auf längere Dauer ermöglichen soll. Da im Gefahrenfall notwendigerweise die Arbeitsstrombremse deaktiviert ist, um den Rauchschutzvorhang oder den Feuerschutzbehang in Schließstellung überzuführen, besteht die Gefahr, daß bei einem Stromausfall oder bei einer Störung der Motorsteuerung ein unkontrolliertes Herunterfahren des Vorhanges in die Schließstellung auftritt, wodurch der Behang aufgrund der auftretenden Beschleunigung bzw. Momente beschädigt werden kann. Zudem besteht auch die Gefahr der Verletzung der im Gefahrenfall den Behang passierenden bzw. unter dem Behang hindurcheilenden Personen.

Um dies zu verhindern wurde bereits vorgeschlagen (DE 1 96 10 876), eine fliehkraftbetriebene Reibungsbremse vorzusehen, die bei einer oberhalb der Nenndrehzahl der Wickelwelle liegenden Drehzahl anspricht und ein kontrolliertes Absinken des Behanges gewährleistet. Diese mechanische Lösung erfordert mit der Reibungsbremse ein weiteres Bauteil, was das Gesamtgerät verteuert.

Andererseits wurde zum Begrenzen der Drehzahl bei Gleichstrommotoren im Bremsbetrieb beim Hinablassen des Behanges, bereits vorgeschlagen, definierte elektrische Widerstände in den Ankerkreis einzubauen; insoweit sei auf VEM-Handbuch, Die Technik der elektrischen Antriebe, Grundlagen, VEB Verlag Technik, Berlin, 7. Auflage, 1979, Seite 56-58 verwiesen. Der Gleichstromantrieb wird dadurch generatorisch belastet und liefert ein Bremsmoment. Damit wird verhindert, daß im generatorischen Betrieb die Drehzahl unzulässig hoch steigen kann und der Motor, z.B. durch zu hohe Fliehkräfte an der Ankerwicklung oder durch zu hohe Spannung am Entstörfilter, zerstört wird. Konkret ist dabei an dem Antriebsmotor ein Widerstand über einen Relaisöffnerkontakt parallel zum Anker geschaltet. Zusätzlich ist parallel zum Anker ein 12-Voltrelais mit einer Diode in Reihe geschaltet. Dieses Relais kann bei der Auffahrt anziehen und den Öffnerkontakt öffnen, so daß der Widerstand bei Auffahrt nicht zur Wirkung kommt. Hingegen bei Abfahrt, wenn die Polung anders gerichtet ist, dann wird dieses Relais nicht betätigt, so daß der Widerstand zusammen mit dem Anker einen geschlossenen Stromkreis bildet und ein Bremsmoment erzeugt. Die unterschiedliche Polung bzw. das Hinzuschalten oder Abschalten des Widerstandes in Folge der unterschiedlichen Polung erfolgt am einfachsten durch eine Diode.

Die eingefügten Ankerwiderstände wirken jedoch über den gesamten Drehzahlbereich, d.h. auch beim Loslaufen erhöht sich das Gegenmoment bzw. die Hemmung des Antriebs. Bei Anwendungen mit zunehmender Beschleunigungskraft, wie z.B. Rauchschutzvorhängen, treten stark unterschiedliche Lastmomente auf, die durch das zunehmende Gewicht des ablaufenden Vorhanges bedingt sind, wodurch die Dimensionierung des eingebauten Ankerwiderstandes problematisch wird. Hier muß für leichtes selbsttätiges Loslaufen und für die Begrenzung der maximalen Drehzahl ein Kompromiß gewählt werden. Für sehr große Laständerungen ist dies sehr schwierig bzw. nicht möglich. Der eingefügte Ankerwiderstand muß nämlich abhängig vom Vorhanggewicht gewählt werden. Bei hohen Vorhanggewichten kommt ein kleiner Widerstand zum Einsatz. Der kleine Widerstand behindert natürlich auch das Loslaufen in der oberen Position. Damit wird zusätzliches Gewicht an der unteren Schiene notwendig, um ein sicheres Loslaufen in allen Betriebslagen zu gewährleisten. Dadurch verringert sich die zulässige Nutzfläche des Vorhangs und er kann eventuell nicht in der beabsichtigten Größe eingesetzt werden. Weiterhin findet ein ständiges Beschleunigen des Vorhangs während der Abfahrt statt, d.h. die maximale Drehzahl wird zum Ende des Absinkens des Vorhangs erreicht. Schwierig ist damit auch die Einstellung einer gewünschten konstanten Drehzahl oder Ablaufgeschwindigkeit des Vorhangs.

Aus der CH-A- 685221 ist ein Torantrieb mit den Merkmalen des Oberbegriffs des Anspruchs 1 bekannt, mit einem Gleichstrommotor und einer zusätzlichen Wirbelstrombremse zur Dämpfung in der Bewegung. Bei Stromausfall treten ein Wicklungskurzschluss im Motor selbst und eine Wirbelstrombremse in Funktion. Nachteilig hierbei ist, dass beide Bremsen kein Bremsmoment im Stillstand besitzen, so dass für eine Stillstandbremsung noch.eine weitere Bremse benötigt wird.

Davon ausgehend liegt der Erfindung die Aufgabe zugrunde, eine Vorrichtung der eingangs genannten Art vorzuschlagen, die gegenüber der mechanischen Lösung preisgünstiger und sicherer ist, wobei der Vorhang im Gefahrenfall selbst bei Stromausfall oder bei einer Störung der Steuerung des Antriebs kontrolliert und sicher herabgefahren wird, ohne dass die Gefahr der Beschädigung des Behanges oder eine Verletzungsgefahr für den Behang passierende Personen besteht.

Diese Aufgabe wird erfindungsgemäß gelöst durch eine Antriebsvorrichtung mit den Merkmalen des Anspruches 1. Vorteilhafte Ausgestaltungen der Erfindung finden sich in den Unteransprüchen.

Die Arbeitsstrombremse nach der Erfindung ist bei aktiviertem Elektromotor deaktiviert und umgekehrt. Bei stromlosem Elektromotor, z. B. in der oberen Endstellung in Normalbetrieb, ist sie mit Spannung, z. B. 24 V, beaufschlagt und hält den Rauchschutzvorhang in der gewünschten Stellung. Im stromlosen Zustand, z. B. bei längerem Stromausfall oder dgl., ist sie deaktiviert. Es kommt zu einem Herunterfahren des Rauchschutzvorganges durch dessen Eigengewicht. Um bei dem Stromausfall oder im Gefahrenfall bei deaktivierter Arbeitsstrombremse ein kontrolliertes Herunterfahren zu ermöglichen, wird die vom Elektromotor beim Abrollen erzeugte Spannung zum Aktivieren die Arbeitsstrombremse benutzt, indem die am Anker auftretende generatorische Spannung die Arbeitsstrombremse betätigt. Da die wirkende Bremskraft normalerweise mit der Höhe der anliegenden Spannung wächst (quasi-linear), erhöht sich automatisch die Bremskraft mit steigender Drehzahl, so daß sich von selbst eine Abrollgeschwindigkeit einstellt, die zu keiner Beschädigung der Bauteile führt.

Nach einer ersten Ausführung der Erfindung ist es vorgesehen, daß die Arbeitsstrombremse parallel zur Ankerwicklung des Elektromotors geschaltet ist. Von Vorteil ist eine weitere Ausführungsform, bei der in Reihe mit der Arbeitsstrombremse ein Vorwiderstand, wie bspw. ein ohmscher Widerstand, eine Diode, eine Zenerdiode oder eine beliebige Kombination von ohmschen Widerstand, Diode oder Zenerdiode oder eine elektronische Regelschaltung geschaltet ist.

Es ist dann also parallel zur Ankerwicklung des Motors ein Vorwiderstand in Reihe mit der Arbeitsstrombremse geschaltet. Während beim Stand der Technik bei dem vorgeschalteten Ankerwiderstand der größte Teil der Leistung (ca. 80 %) am Ankerwiderstand umgesetzt werden muß, wird bei der Erfindung nur eine kleiner Teil der Leistung (unter 50 %) am Vorwiderstand umgesetzt. Die restliche Bremsleistung wird am Belag der Arbeitsstrombremse in Wärme umgesetzt.

Nachfolgend die Vorteile und Unterschiede der einzelnen Vorwiderstände:

Der ohmsche Widerstand hat den Vorteil, daß er kostengünstig ist, relativ einfach aufzubauen ist und zuverlässig in Hinsicht auf elektromagnetische Verträglichkeit ist. Weiterhin kann über den Wert des Widerstandes die gewünschte Drehzahl eingestellt werden.

Die Diode anstelle eines ohmschen Widerstandes bietet den Vorteil, daß schon bei relativ kleiner Drehzahl, etwa knapp über der Nenndrehzahl, die Bremswirkung eintritt. Gleichzeitig wird das Anziehen der Bremse bei der Auffahrt durch die richtige Polung der Diode verhindert.

Eine Zenerdiode hat den Vorteil, daß sehr exakt der Zeitpunkt eingestellt werden kann, an welchem die Bremse zu wirken anfängt.

Die Kombination von Diode und Widerstand oder Zenerdiode und Widerstand ermöglicht, daß bei Motorbetrieb Vorwiderstand und Bremse stromlos sind. Dies führt zu geringerer Erwärmung des Vorwiderstandes und der Bremsspule.

Die elektronische Regeleinrichtung ermöglicht ein präzises Regeln der Drehzahl, bei der die Bremse anfängt zu wirken. Eine Anpassung an unterschiedliche Gewichte und Größen der Rolläden ist damit ebenso leicht möglich.

Weitere Vorteile und Anwendungsmöglichkeiten der vorliegenden Erfindung ergeben sich aus der nachfolgenden Beschreibung der Ausführungsbeispiele anhand der Zeichnungen.

Es zeigen:
- Figur 1: das Blockschaltbild eines Rauchschutzvorhangantriebs
- Figuren 2 bis 5: vier mögliche Ausführungen von erfindungsgemäßen Bremsvorrichtungen für Rauchschutzvorhangantriebe
- Figur 6: den schematischen Aufbau einer Arbeitsstrombremse und
- Figur 7: zwei Diagramme, die die Entwicklung der Ablaufgeschwindigkeit zweier Rauchschutzvorhangantriebe zeigen.

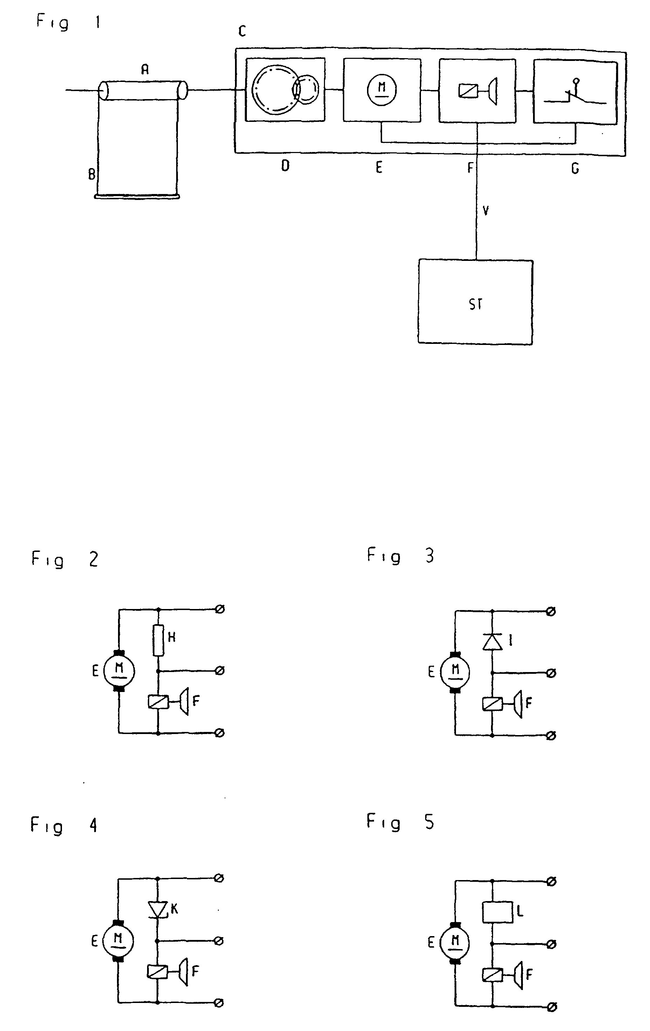

Figur 1 zeigt schematisch den Aufbau eines Rauchschutzvorhangantriebs. An einer Wickelwelle A ist der Rauchschutzvorhang B befestigt. Die Wickelwelle A wird vom Gleichstromantrieb C in Rotation versetzt, um den Rauchschutzvorhang B auf- oder abzurollen. Der Gleichstromantrieb C enthält hier die Bauteile Getriebe D, Elektromotor E, Arbeitsstrombremse F und Endschalter G. Der Elektromotor E und die Arbeitsstrombremse F sind bei dem hier gewählten Ausführungsbeispiel auf einer gemeinsamen Welle angeordnet, die mit dem Eingang des Getriebes D, welches üblicherweise als Untersetzungsgetriebe ausgebildet ist, zusammenwirkt. Dessen Abtriebswelle wirkt auf die Wickelwelle A. Die einzelnen Baugruppen des Antriebes, Elektromotor E, Arbeitsstrombremse S und Endschalter G sind mittels einer mehradrigen elektrischen Verbindungsleitung V an eine Steuerung ST angeschlossen. Die Steuerung ST sorgt für die Betriebsspannung und überwacht den Ladungszustand der Akkuversorgung. Weiterhin hat die Steuerung ST die Aufgabe, eine sichere Funktion des Rauchschutzvorhanges im Gefahrenfalle, wie auch im Testbetrieb zu gewährleisten. Die Arbeitsstrombremse F ist eine elektromagnetische Bremse, welche bei aktiviertem Elektromotor E deaktiviert ist und umgekehrt. Bei stromlosem Elektromotor E, z.B. in der oberen Endstellung in Normalbetrieb, ist sie mit Spannung, z.B. 24 V, beaufschlagt und hält den Rauchschutzvorhang B in der gewünschten Stellung. Im stromlosen Zustand, z.B. bei längerem Stromausfall oder dgl., ist sie deaktiviert. Es kommt dann zu einem Herunterfahren des Rauchschutzvorhanges B durch dessen Eigengewicht. Um bei dem Stromausfall oder im Gefahrenfall bei deaktivierter Arbeitsstrombremse F ein kontrolliertes Herunterfahren des Rauchschutzvorhanges B zu ermöglichen, ist die erfindungsgemäße Bremsvorrichtung vorgesehen, von der in den Figuren 2-5 vier Ausführungsformen gezeigt sind.

Figur 2 zeigt eine erfindungsgemäße Bremsvorrichtung mit den Bauelementen Elektromotor E, Arbeitsstrombremse F und als Vorwiderstand den Widerstand H. Erfindungsgemäß sind hier also der Widerstand H und die Arbeitsstrombremse F parallel zur Ankerwicklung des Gleichstrommotors E geschaltet. Wenn der Rauchschutzvorhang B aufgewickelt ist und im Gefahrenfall in Schließstellung fahren soll, jedoch der Antriebsmotor E sowie die Arbeitsstrombremse F aufgrund eines Arbeitsstromausfalles deaktiviert sind, beginnt der Vorhang B sich aufgrund seines Eigengewichtes nach unten zu bewegen. Der Rauchschutzvorhang B beschleunigt aufgrund der immer größer werdenden abgewickelten Masse kontinuierlich und bringt den Elektromotor E auf hohe Drehzahlen. Hier wirkt nun die erfindungsgemäße Bremsvorrichtung. Die vom Elektromotor E erzeugte Spannung, die ja proportional zu der ihm aufgezwungenen Drehzahl ist, wirkt ab einer bestimmten Spannungsschwelle auf die Arbeitsstrombremse F und betätigt diese, wodurch der Motor E und die Wickelwelle A gebremst werden. Da die Bremskraft der Arbeitsstrombremse F proportional zur Spannung ist, steigt sie mit wachsender Drehzahl und verhindert so automatisch ein zu schnelles Abwickeln des Vorhanges B. Erfindungsgemäß bewirkt also die generatorische Spannung des ablaufenden Motors E ein Ansprechen der Arbeitsstrombremse F, so daß ein unkontrolliertes Ablaufen des Behanges automatisch verhindert wird. Die Größe des Widerstandes H ist frei wählbar und kann dem Gewicht des Vorhangs sowie der gewünschten Maximalgeschwindigkeit angepaßt werden. Je nach Größe des Widerstandes H werden unterschiedliche Anteile der bei der Bremsung zu vernichtenden Energie im Widerstand H oder in der Arbeitsstrombremse F in Wärme umgewandelt. In einer Ausführung ohne Widerstand H oder mit nur einem sehr kleinen Widerstand H wird die gesamte Energie bzw. der größte Teil davon in der Arbeitsstrombremse F in Wärme umgewandelt.

Figur 3 zeigt eine Ausführung, bei der als Vorwiderstand die Diode I vorgesehen ist. Die Diode I bewirkt, daß die Bremsung, wegen fehlendem ohmschen Widerstandes, schon bei geringen Drehzahlen beginnt. Zudem verhindert die Diode I durch ihre Sperrwirkung, daß die Arbeitsstrombremse F mit Spannung versorgt wird, also anzieht, wenn der Motor E im Normalbetrieb mit Spannung versorgt wird, um den Vorhang B hochzuziehen.

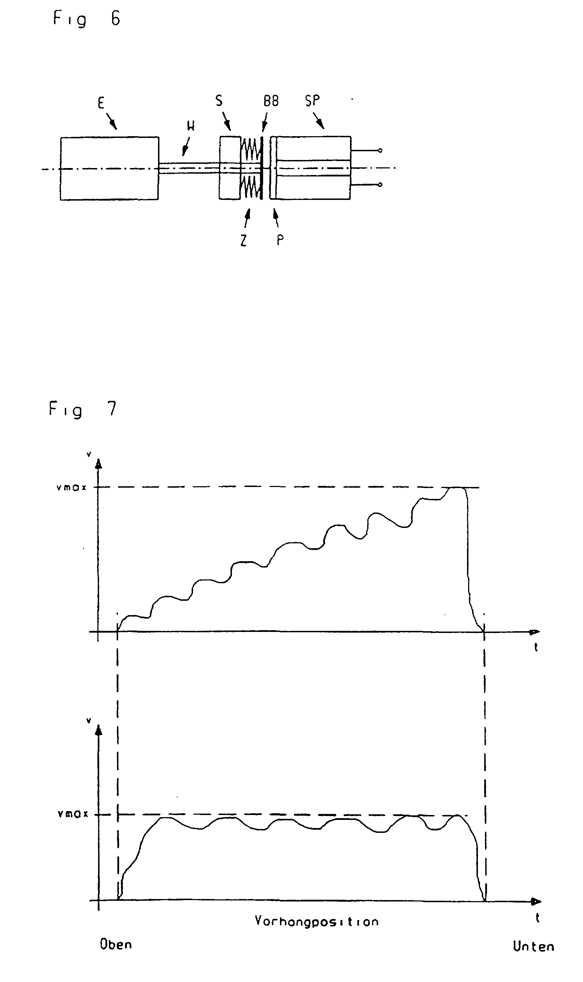

Bei der Ausführung der Figur 4 ist als Vorwiderstand die Zenerdiode K vorgesehen. Damit läßt sich die Spannung, ab der die Bremse wirkt, exakt einstellen.

In der Ausführung der Figur 5 ist eine elektronische Regeleinrichtung L vorgesehen, die sowohl die präzise Einstellung der Drehzahl (Spannung) erlaubt, ab der die Bremse wirkt, als auch das Stromlos-Schalten der Arbeitsstrombremse F beim normalen Auf- oder Abrollen des Vorhangs. Die Elektronik erlaubt auch eine Anpassung an unterschiedliche Gewichte oder Längen der zu hebenden Vorhänge. Ebenso möglich ist die Einstellung verschiedener Ablaufgeschwindigkeiten, z.B. kann am Anfang eine schnellere Geschwindigkeit toleriert werden, während am Ende, z.B. kurz vor dem Schließen oder zum Verhindern von Einquetschungen, die Absenkgeschwindigkeit verlangsamt wird.

Figur 6 zeigt schematisch den Aufbau einer Arbeitsstrombremse F. Sie sitzt auf einer Welle W mit dem Elektromotor E, der als Antrieb des Vorhangs dient. Die Welle W dreht die Scheibe S, an der über die Zugfedern Z der Bremsbelag BB befestigt ist. Ihm gegenüber ist die nicht mitrotierende Magnetspule SP mit Polschuhen P angeordnet. Wird an die Magnetspule SP Spannung angelegt, erzeugt sie ein Magnetfeld und zieht den Bremsbelag BB an die Polschuhe P. Die Bremswirkung setzt ein. Sie ist näherungsweise proportional der angelegten Spannung an der Spule SP.

Figur 7 zeigt zwei Geschwindigkeits-Zeit-Diagramme von Rauchschutzvorhangantrieben beim Ablauf ohne Spannungsversorgung. Im oberen Diagramm (Stand der Technik) ist der Motor mit einem Ankerwiderstand versehen. Im unteren Diagramm ist der Motor mit einer erfindungsgemäßen Bremsvorrichtung ausgerüstet.

Die Kurve nach dem Stand der Technik zeigt eine kontinuierliche Beschleunigung über die Strecke oder über die Zeit des Ablaufes, d.h. der Vorhang läuft mit einer geringen Drehzahl aus dem Stand an, beschleunigt aufgrund der größer werdenden abgerollten Masse ständig bis zur maximalen Drehzahl, die im unteren Punkt in der unteren Endlage erreicht wird und stoppt dann abrupt. Die mittlere Geschwindigkeit, die sich daraus ergibt, liegt etwa im Bereich der mittleren Lage und ist eigentlich die gewünschte Drehzahl für den Ablauf.

Bei der Erfindung verläuft die Drehzahl im Zeitdiagramm etwas anders. Da kein ohmscher Widerstand wirkt, beschleunigt der Vorhang zunächst sehr stark (auf die maximale Drehzahl, dort fängt die Arbeitsstrombremse F an zu wirken, und der Vorhang kann nicht mehr weiter beschleunigen. Überdrehzahlen und eine Zerstörung des Vorhangs oder eine Verletzung von Personen können so verhindert werden.

Mögliche Anwendungsfelder für die erfindungsgemäße Schaltungsanordnung sind zum Beispiel Rauchschutzvorhänge, welche bei Rauchentwicklung den entsprechenden Raum abgrenzen sollen, Feuerschutzvorhänge mit entsprechender Funktion oder Rolläden für Container auf Fahrzeugen. Grundsätzlich kann die Erfindung überall eingesetzt werden, wo ein Gegenstand auf- und abgezogen wird und eine Sicherheits- bzw. eine Zusatzbremseinrichtung vorhanden sein muß. Weitere Applikationen sind bspw. Schwimmbadabdeckungen, welche von Hand zugezogen werden, wobei jedoch ein motorischer Antrieb vorhanden ist. Die Arbeitsstrombremse kann dabei als Sicherheitseinrichtung dienen, wenn zu stark von Hand gezogen und der Motor dabei überlastet wird.

Mit der Erfindung wird auch erreicht, daß Personen geschützt werden, die durch ein Tor hindurch gehen, welches mit einem sich absenkenden Rauchschutzvorhang oder dgl. bestückt ist. Zum anderen werden auch der Motor oder weitere Bauteile vor Überlastung geschützt.

## Patentansprüche

1. Antriebsvorrichtung für einen Rauchschutzvorhang, Rolladen, Rolltor, Garagentor, Feuerschutzbehang, Raumteiler, Behang oder dgl., wobei der angetriebene Gegenstand mittels eines Elektromotors (E) auf einer Wickelwelle (B) aufrollbar bzw. abrollbar ist, wobei eine Bremse und eine elektrische Verbindung zwischen Elektromotor (E) und Bremse vorgesehen sind, so dass die vom Elektromotor (E) beim Abrollen erzeugte Spannung die Bremse aktiviert, **dadurch gekennzeichnet, dass** die Bremse eine Arbeitsstrombremse (F) ist.

2. Antriebsvorrichtung nach Anspruch 1, **dadurch gekennzeichnet, dass** die Arbeitsstrombremse (F) parallel zur Ankerwicklung des Elektromotors (E) geschaltet ist.

3. Antriebsvorrichtung nach Anspruch 1 oder Anspruch 2, **dadurch gekennzeichnet, dass** in Reihe mit der Arbeitsstrombremse (F) ein Vorwiderstand geschaltet ist.

4. Antriebsvorrichtung nach einem der vorhergehenden Ansprüche, **dadurch gekennzeichnet, dass** als Vorwiderstand ein ohmscher Widerstand (H) vorgesehen ist.

5. Antriebsvorrichtung nach einem der vorhergehenden Ansprüche, **dadurch gekennzeichnet, dass** als Vorwiderstand eine Diode (I) vorgesehen ist.

6. Antriebsvorrichtung nach einem der vorhergehenden Ansprüche, **dadurch gekennzeichnet, dass** als Vorwiderstand eine Zenerdiode (K) vorgesehen ist.

7. Antriebsvorrichtung nach einem der vorhergehenden Ansprüche, **dadurch gekennzeichnet, dass** als Vorwiderstand eine beliebige Kombination von ohmschen Widerstand (H), Diode (I), Zenerdiode (K) oder eine elektronische Regelschaltung (L) vorgesehen ist.

## Claims

1. Drive device for a smoke protection curtain, shutters, roller door, garage door, fire protection curtain, room divider, curtain or the like, wherein the driven article can be rolled up and unrolled by means of an electric motor (E) on a winding shaft (B), wherein a brake and an electrical connection between the electric motor (E) and the brake are provided so that the voltage produced by the electric motor (E) during unrolling activates the brake, **characterised in that** the brake is an operating current brake (F).

2. Drive device according to claim 1, **characterised in that** the operating current brake (F) is connected in parallel to the armature winding of the electric motor (E).

3. Drive device according to claim 1 or claim 2, **characterised in that** a protective resistance is connected in series with the operating current brake (F).

4. Drive device according to one of the preceding claims, **characterised in that** a resistive impedance (H) is provided as protective resistance.

5. Drive device according to one of the preceding claims, **characterised in that** a diode (I) is provided as protective resistance.

6. Drive device according to one of the preceding claims, **characterised in that** a Zener diode (K) is provided as protective resistance.

7. Drive device according to one of the preceding claims, **characterised in that** a desired combination of resistive impedance (H), diode (I), Zener diode (K) or an electronic regulating circuit (L) is provided as protective resistance.

## Revendications

1. Dispositif d'entraînement pour rideau anti-fumée, volet roulant, porte roulante, porte de garage, rideau coupe-feu, cloison intérieure, tenture ou analogue, l'objet entraîné pouvant être enroulé sur et/ou déroulé sur un arbre d'enroulement (B) au moyen d'un moteur électrique (E), un frein et un raccordement électrique entre le moteur électrique (E) et le frein étant prévus pour que la tension produite par le moteur électrique (E) lors du déroulement actionne le frein, **caractérisé en ce que** le frein est un frein à courant de travail (F).

2. Dispositif d'entraînement selon la revendication 1, **caractérisé en ce que** le frein à courant de travail (F) est monté en parallèle avec l'enroulement d'induit du moteur électrique (E).

3. Dispositif d'entraînement selon une des revendications 1 ou 2, **caractérisé en ce qu'**une résistance série est montée en série avec le frein à courant de travail (F).

4. Dispositif d'entraînement selon une des revendications précédentes, **caractérisé en ce qu'**une résistance ohmique (H) est prévue en tant que résistance série.

5. Dispositif d'entraînement selon une des revendications précédentes, **caractérisé en ce qu'**une diode (I) est prévue en tant que résistance série.

6. Dispositif d'entraînement selon une des revendications précédentes, **caractérisé en ce qu'**une diode zéner (K) est prévue en tant que résistance série.

7. Dispositif d'entraînement selon une des revendications précédentes, **caractérisé en ce qu'**une combinaison quelconque d'une résistance ohmique (H), d'une diode (L) et d'une diode zéner (K), ou un circuit de régulation électronique (L) est prévu(e) en tant que résistance série.
